# EUROPÄISCHE PATENTSCHRIFT

(11) **EP 0 418 926 B1**
(45) Veröffentlichungstag und Bekanntmachung des Hinweises auf die Patenterteilung: **11.08.1993**
(21) Anmeldenummer: 90118207.1
(22) Anmeldetag: 21.09.1990
(51) Int. Cl.: B67D 1/10, G01F 11/02

(54) **Vorrichtung zur dosierten Ausgabe von Flüssigkeiten aus einem Vorratsbehälter**
Device for dispensing metered quantities of liquids from a storage container
Dispositif de distribution de doses de liquides à partir d'un réservoir de stockage

(30) Priorität: 11.12.1989 DE 3940875; 22.09.1989 US 410882
(43) Veröffentlichungstag der Anmeldung: 27.03.1991
(73) Patentinhaber: Bosch-Siemens Hausgeräte GmbH, 81669 München (DE); THE COCA-COLA COMPANY, Atlanta, Georgia 30301 (US)
(72) Erfinder: Raab, Alfred, Dipl.-Ing.(FH), W-7080 Attenhofen (DE); Ciavarella, Alfredo, Dipl. Ing.(FH), W-7082 Oberkochen (DE); Plester, George, B-1640 Rhode-Saint-Genèse (BE); Schorr, Frederick D., Dipl.-Ing., Decatur, Georgia 30033 (US); Troska, Georg, Dipl.-Ing., W-4352 Herten (DE)
(74) Vertreter: Rode, Franz

(56) Entgegenhaltungen:
- WO-A-80/02546
- FR-A- 1 064 626
- US-A- 2 464 030

## Beschreibung

Die vorliegende Erfindung bezieht sich auf eine Vorrichtung gemäß dem Oberbegriff von Patentanspruch 1.

Eine derartige Vorrichtung ist bevorzugt geeignet, in Getränkeautomaten, mit denen karbonisiertes Wasser mit Getränkekonzentraten zu einem Erfrischungsgetränk vermischt werden, die Getränkekonzentrate mengenkontrolliert aus einem Vorratsbehälter für den Mischvorgang zur Verfügung stellen. In diesem Umfeld ist es besonders wichtig, unter Verwendung möglichst einfacher Mittel neben der genauen Dosierung des karbonisierten Wassers auch die abzugebenden Getränkekonzentrate genau zu dosieren, um das gewünschte Mischungsverhältnis für das bereitzustellende Getränk mit der erforderlichen Genauigkeit zu erzielen. Dieses Mischungsverhältnis soll den Standard erreichen, welchen die vergleichbaren, in Flaschen auf den Markt gebrachten Fertiggetränke aufweisen.

Für den Einsatz in Getränkeautomaten sind zur Ausgabe von Getränkekonzentraten Dosierkammer-Ausgabeeinrichtungen bekannt geworden (DE-OS 25 44 671, DE-OS 34 09 142, DE-OS 36 22 745). In ihrer Betriebslage sind diese Dosierkammer-Ausgabeeinrichtungen an einem Vorratsbehälter mit der Ausgabeöffnung nach unten gerichtet angeordnet. Durch ein Magnetsystem wird ein Steuerschieber innerhalb dieser Dosierkammer-Ausgabeeinrichtung aus einer unteren Lage, in der die ausgangsseitige Durchflußöffnung verschlossen ist, in eine obere Stellung, in der die eingangsseitige Durchflußöffnung verschlossen ist, gehoben, so daß der Dosierkammer-Inhalt durch Schwerkraft herausfließen kann. Im Gegenzug wird das Dosierkammer-Volumen durch Luft aufgefüllt. Nimmt der Steuerschieber wieder seine untere Stellung ein, so gelängt im Vorratsbehälter bevorratetes Getränkekonzentrat durch Schwerkraft in die Dosierkammer-Ausgabeeinrichtung und die darin befindliche Luft strömt in den Vorratsbehälter. Die aufzuwendenden Steuerkräfte zur Betätigung des Steuerschiebers sind entsprechend gering, da keine eigentlichen Förderkräfte aufzubringen sind. Es können Vorratsbehälter mit formstabilen oder auch mit flexiblen Wandungen Verwendung finden. In beiden Fällen erfolgt Volumenausgleich bei Entnahme von Getränkekonzentraten durch Luft.

Die bekannten Dosierkamm er-Ausgabeeinrichtungen sind aufgrund der technischen Gegebenheiten bezüglich ihrer Größe und damit des Ausgabevolumens äußerst schwierig verkleinerbar. Sie eignen sich hervorragend zur Ausgabe von Konzentraten für 1/10-Getränke-Portionseinheiten. Für wesentlich kleinere Mengen treten größere Probleme der Funktionssicherheit und der Dosiergenauigkeit auf. Damit ist es mit Hilfe dieser bekannten Dosierkammer-Ausgabevorrichtungen schwierig, eine individuelle Menge von Getränken je nach Bedarf auszugeben.

Es ist auch eine Vorrichtung zur dosierten Ausgabe von Flüssigkeiten aus einem Vorratsbehälter der eingangs genannten Art bekannt (FR-A-10 64 626), wobei in einem gehäuseumschlossenen Zylinderraum ein Förderkolben längsverschieblich gelagert ist, und wobei in der Bohrung des Förderkolbens ein Steuerkolben gegenüber dem Förderkolben, begrenzt durch axiale Anschläge, längsverschieblich gelagert ist, und wobei in der Vorrichtung eine Einlaßöffnung für den Zylinderraum zwischen dem Steuerkolben und einer unmittelbar im stirnseitigen Bereich des Zylinderraums liegenden Zylinderabschnitt des Zylindergehäuses sowie ein Auslaßöffnung gebildet werden, wobei die Einlaßöffnung und die Auslaßöffnung durch axiale Verschiebung des Steuerkolbens gegenüber dem Zylinderraum und dem Förderkolben alternierend geöffnet bzw. geschlossen wird.

Es ist auch bekannt (US-PS 3 667 499) aus einem flexiblen Vorratsbehälter Flüssigkeit mit Hilfe eines Pumpsystems zu entnehmen und auszugeben. Mit Hilfe einer derartigen Maßnahme kann ein Vorratsbehälter mit flexiblen Wandungen entleert werden, ohne daß zum Volumenausgleich im Vorratsbehälter Luft nachströmen kann oder muß. Als brauchbare Dosiereinrichtung, beispielsweise für Getränkekonzentrate zur Erzielung hochgenauer Ausgabevolumina, ist diese bekannte Anordnung jedoch nicht geeignet und auch nicht vorgesehen.

Die Aufgabe der vorliegenden Erfindung liegt nunmehr darin, eine Ausgabeeinheit bereitzustellen, durch welche genaue, mit von Umwelteinflüssen unabhängige Dosierungen des Ausgabevolumens praktisch kontinuierlich ermöglicht sind. Beispielsweise für Getränkeautomaten mit Hilfe derer Getränkekomponenten zu einem Getränk zusammengeführt werden, sind derartige Ausgabeeinrichtungen von großer Bedeutung.

Eine Vorrichtung, die diesen Anforderungen genügt, ist erfindungsgemäß dadurch gekennzeichnet, daß durch eine dem Steuerkolben von einem Antriebselement (Zwischenhebel) zugeführte Axialbewegung dieser in beiden Bewegungsrichtungen einen Vorhub zum Öffnen bzw. Schließen der Einlaß- und der Auslaßöffnung ausführt, wonach durch Mitnahme über jeweilige Anschläge der Förderkolben gleichermaßen axial verschoben wird, und daß zur Ableitung der Flüssigkeit aus dem Zylinderraum in dem Steuerkolben zumindest ein Kanal angeordnet ist, welcher im Bereich einer durch den Förderkolben gebildeten Steuerkante ausgehend zur Ausgabeöffnung geführt ist.

Eine Vorrichtung nach diesen erfindungsgemäßen Merkmalen zeichnet sich dadurch aus, daß genaue Dosierungen der auszugebenden Flüssigkeit praktisch kontinuierlich durch Aneinanderreihung von relativ sehr kleinen Einzelausgabevolumina erreichbar sind. Durch Antrieb über beispielsweise eine Exzentervorrichtung sind zum einen die Ausgabezyklen eng aneinanderreihbar und zum anderen auch quantifizierbar. Im Endeffekt stellt die einfach erfaßbare Anzahl der Ausgabezyklen die Referenzgröße für die ausgegebene Menge der Flüssigkeit dar. Es bietet sich an, die Teile der Vorrichtung zur dosierten Ausgabe von Flüssigkeiten aus Kunststoff zu fertigen. Diese Maßnahme ist herstellungstechnisch von großem Vorteil. Durch geeignete Materialauswahl sind gewünschte Gleiteigenschaften zwischen den relativ zueinander bewegten Funktionsteilen erzielbar. Vorteilhafterweise kann diese Vorrichtung unmittelbar und fest einem Vorratsbehälter zugeordnet werden. Damit ist erreichbar, daß die Ausgabevorrichtung verwechslungsfrei, insbesondere bezüglich des Einzelausgabevolumens der Art der zu fördernden Flüssigkeit angepaßt ausgelegt werden kann. Dieses Ausgabevolumen ist somit beim Einsatz im Getränkeautomaten maßgeblich für das mit dem jeweiligen Getränkekonzentrat zu erzielende Mischungsverhältnis des fertigen Getränks; die weitere Getränkekomponente, nämlich das karbonisierte Wasser, kann somit unabhängig vom Mischungsverhältnis jeweils gleichbleibend dosiert werden.

Nach einer bevorzugten Ausgestaltung ist die erfindungsgemäße Vorrichtung dadurch gekennzeichnet, daß zur Ableitung der Flüssigkeit aus dem Zylinderraum über die Auslaßöffnung im Steuerkolben zumindest ein Kanal angeordnet ist, welcher im Bereich einer durch die Förderkolben gebildeten Steuerkante ausgehend, zu einer Ausgabeöffnung geführt ist, und daß die Einlaßöffnung für den Zylinderraum zwischen dem Steuerkolben und einer unmittelbar im stirnseitigen Bereich des Zylinderraums liegenden Zylinderabschnitt des Zylindergehäuses gebildet wird. Diese Maßnahmen erlauben eine rotationssymmetrische Ausgestaltung der Einzelteile.

Es ist vorteilhaft, die Vorrichtung dahingehend auszugestalten, daß die Einlaßöffnung für den Zylinderraum durch einen im stirnseitigen Bereich des Zylinderraums in einen Zylinderabschnitt geführten Einlaß-Steuerkolben in Verbindung mit dem Steuerkolben gebildet wird, wobei der Steuerkolben gegenüber dem Einlaß-Steuerkolben zwischen axialen Anschlagbegrenzungen zur Durchführung eines Vorhubs, der zum Öffnen bzw. zum Schließen der Einlaßöffnung genutzt wird, axial verschieblich ist, wonach der Einlaß-Steuerkolben über die jeweilige Anschlagbegrenzung vom Steuerkolben mitbewegt wird. Damit ist erreichbar, daß der erforderliche Hub für die Steuerbewegungen reduziert wird. Für die Ausgestaltung der Einzelteile lassen sich unterschiedliche Maßnahmen sinnvollerweise zur Anwendung bringen, welche Gegenstand von Unteransprüchen sind.

Insbesondere kann es sich als zweckmäßig oder nützlich erweisen, im Bereich zumindest der zylindrischen Führungswandungen zwischen Zylindergehäuse, Förderkolben und/oder Steuerkolben Dichtungslippen anzuordnen, um Leckagen vorzubeugen.

Nach den Merkmalen der Erfindung ausgestaltete Ausführungsbeispiele sind anhand der Zeichnung im folgenden näher beschrieben. Es zeigen:
- Fig. 1: eine Ausgabevorrichtung in Verbindung mit einem Vorratsbehälter in schematisierter Darstellung,
- Fig. 2: diese Ausgabevorrichtung in Verbindung mit einem Antriebssystem in schematisierter Darstellung,
- Fig. 3a bis Fig. 3d: unterschiedliche Funktionsstellungen dieser Ausgabevorrichtung,
- Fig. 4a und Fig. 4b: eine andere Ausgestaltung der Ausgabevorrichtung,
- Fig. 5a und Fig. 5b: eine weitergebildete Ausführungsform einer Ausgabevorrichtung,
- Fig. 6a bis Fig. 6g: unterschiedliche Funktionsstellungen dieser Ausgabevorrichtung und
- Fig. 7: eine weitere Gestaltung der Ausgabevorrichtung.

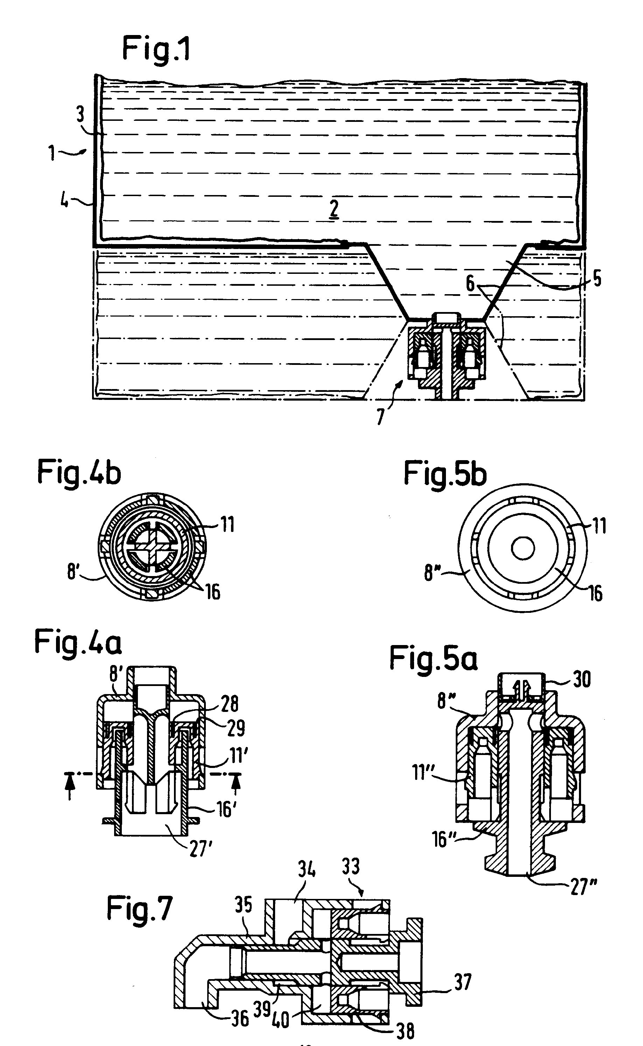

Bei einer Anordnung gemäß Fig. 1 ist ein Vorratsbehälter 1 zur Aufnahme eines Getränkekonzentrats 2 aufgebaut aus einem Innenbehälter mit flexiblen Wandungen 3 und einem diesen Innenbehälter 3 umschließenden, schachtelförmigen Behälter mit im wesentlichen formstabilen Behälterwandungen 4. Die flexiblen Wandungen 3 des Innenbehälters passen sich dem bevorrateten Volumen des Getränkekonzentrats 2 an. Dabei ist es wichtig, daß durch Ritzen oder Öffnungen in den Bereichen der Wandungen 4 Luft zwischen die Wandungen 4 und die Wandungen 3 gelangen kann. Im Bereich der Ausgabestelle 5 ist über einen Konus 6 aus elastischem Material die Ausgabevorrichtung 7 mit den Wandungen 3 und mit den Wandungen 4 fest verbunden. In der Transport- und Aufbewahrungslage ist der Konus 6 mit der Ausgabevorrichtung 7 in den Innenbereich des Vorratsbehälters 1 gestülpt, wie die strichpunktierte Darstellung veranschaulichen soll.

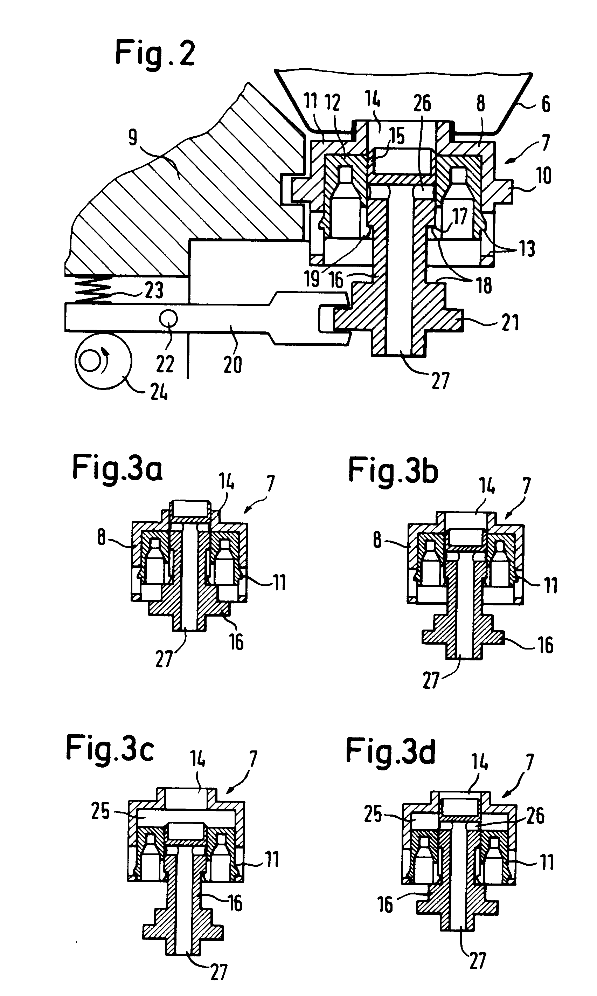

Anhand der Fig. 2 wird der Aufbau der Ausgabeeinrichtung 7 erläutert. Diese Ausgabeeinrichtung 7 besteht aus einem Gehäuse 8, welches im Ausgabebereich eines Getränkeautomaten in dessen Gerätegehäuse 9 über Ansätze 10 gehaltert ist. Innerhalb dieses Gehäuses 8 ist ein Förderkolben 11 axial zwischen Anschlägen 12 und 13 verschieblich angeordnet. Durch diese Anschläge wird der Förderhub festgelegt, welcher das Fördervolumen für das auszugebende Getränkekonzentrat je Arbeitszyklus bestimmt. Eine Zuflußöffnung 14 im Gehäuse 8 und eine zentrale Durchführung 15 im Förderkolben 8 fluchten konzentrisch zueinander, so daß darin ein Schaft eines Steuerkolbens 16 axial verschieblich geführt werden kann. Die axiale Bewegung zwischen Steuerkolben 16 und Förderkolben 11 wird begrenzt durch Anschläge 17 und 18. Die Anschlagbereiche 17 und 18 des Förderkolbens 8 weisen konische Bereiche 19 auf und können radial ausweichen, so daß der Steuerkolben 16 in die Durchführung 15 des Förderkolbens 8 herstellungstechnisch eingeführt werden kann. Angetrieben wird der Steuerkolben 16 über einen Zwischenhebel 20, der einen Ansatz 21 des Steuerkolbens 16 umgreift. Der Zwischenhebel 20 ist um eine ortsfeste Achse 22 schwenkbar gelagert und wird durch einen mit einer Feder 23 zusammenarbeitenden Exzenterantrieb 24 von einem nicht näher dargestellten Motor angetrieben. Die Motorsteuerung ist zweckmäßigerweise dahingehend ausgelegt, daß der Exzenter immer in eine gleiche Ruhe-Winkellage zurückgeführt wird.

Anhand der Figuren 3a bis 3d wird die Funktion der Ausgabevorrichtung 7 bei einem Arbeitszyklus erläutert. Es sei angenommen, daß die Ausgangslage der Funktionsteile die in Fig. 3a dargestellte Position einnehmen. Dabei sind der Förderkolben 11 und der Steuerkolben 16 vollkommen in das Gehäuse 8 eingerückt, so daß die Eingangsöffnung des Gehäuses 14 verschlossen ist und zwischen Gehäuse 8 und Förderkolben 11 kein Pumpvolumenbereich verbleibt. Beim nunmehrigen Antrieb des Steuerkolbens 16 über den Exzenter 24 wird der Steuerkolben 16 nach unten bewegt, und zwar bis in die Position gemäß Fig. 3b, in der die Anschläge 17 zwischen Steuerkolben 16 und Förderkolben 11 zusammentreffen. Bei weiterer Bewegung des Steuerkolbens 16 nach unten wird der Förderkolben 11 über diese Anschläge 17 mit nach unten bewegt, und zwar in die Stellung gemäß Fig. 3c, wobei sich zwischen dem Förderkolben 11 und dem Gehäuse 8 ein Pumpen-Volumenbereich 25 bildet. Dabei wird aus dem Vorratsbehälter Getränkekonzentrat in diesen Pumpen-Volumenbereich 25 gesaugt. Anschließend wird über den Zwischenheber 20 vom Exzenter 24 der Steuerkolben 16 wieder nach oben bewegt, und zwar in die Stellung gemäß Fig. 3d. Dabei wird durch den oberen Bereich des Steuerkolbens 16 die Einlaßöffnung 14 des Gehäuses verschlossen, so daß nunmehr kein Getränkekonzentrat aus dem Pumpvolumenbereich 25 in den Vorratsbehälter 1 zurückfließen kann. Gleichzeitig gelangen Seitenkanäle 26 eines durch den Steuerkolben axial geführten Ausgabekanals 27 in den Pumpen-Volumenbereich 25. Bei der weiteren Bewegung des Steuerkolbens 16 nach oben in die Position gemäß Fig. 3a wirken die Anschläge 18 zwischen dem Steuerkolben 16 dem Förderkolben 11 zusammen, so daß der Förderkolben nach oben mitgenommen wird und sich dabei der Pumpen-Volumenbereich 25 völlig abbaut. Das im Pumpenvolumenbereich 25 befindliche Getränkekonzentrat wird dabei über die Seitenkanäle 26 und den Ausgabekanal 27 nach unten herausgepreßt.

Da der Pumpen-Volumenbereich sehr genau dosiert werden kann, ist mit Hilfe dieser Ausgabevorrichtung 1 eine sehr gute Mengendosierung erzielbar, und zwar wegen der Tatsache, daß der Pumpen-Volumenbereich auch sehr klein ausgelegt werden kann, in so kleinen Schritten, daß durch zyklische Wiederholungen des beschriebenen Ausgabevorgangs über den Exzenter 26 annähernd beliebige Mengen mit hoher Ausgabegenauigkeit bereitgestellt werden können.

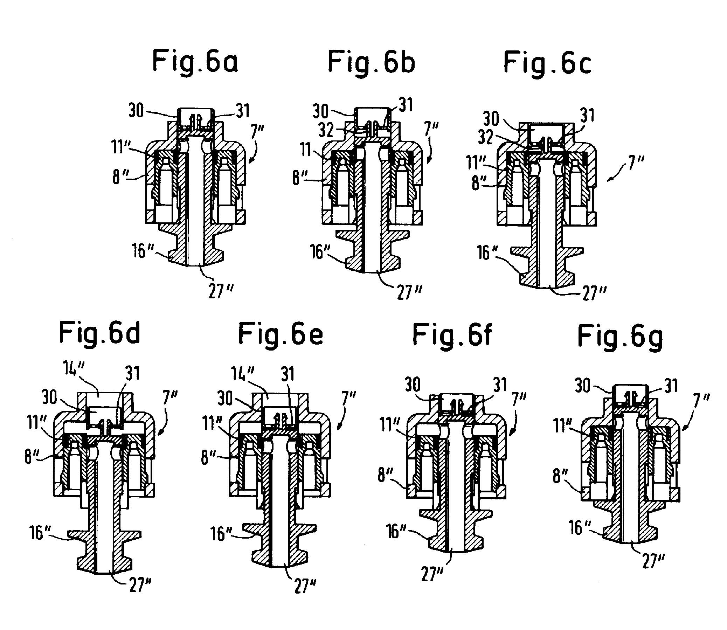

Die Fig. 4a und 4b zeigen eine weitere Ausführungsform einer Ausgabevorrichtung 7', wobei die Fig. 4b einen in der Fig. 4a angedeuteten Schnitt darstellt. Insbesondere ist der Steuerkolben 16' modifiziert ausgestaltet, so daß günstigere Ausgabekanäle vom Pumpen-Volumenbereich 25' weg gebildet werden. Außerdem besitzt der Steuerkolben 11' Dichtungslippen 28 gegenüber dem Gehäuse 81 und Dichtungslippen 29 gegenüber dem Steuerkolben 16'.

Die funktionstechnische Besonderheit der Anordnung gemäß der Ausgabevorrichtung 11'' nach den Fig. 5a und 5b, wobei die Fig. 5b eine Ansicht von unten auf die Vorrichtung gemäß Fig. 5a darstellt, ist darin zu sehen, daß dem
-Steuerkolben 16'' ein zusätzlicher Einlaß-Steuerkolben 30 zugeordnet ist, welcher Zwischenanschlägen gegenüber dem Steuerkolben 16'' eine axiale Bewegung ausführen kann. Damit wird eine bessere Hubausnutzung erreicht.

Die Fig. 6a bis 6g zeigen folgerichtig Funktionsstellungen dieser Ausgabevorrichtung 11''.

Die Fig. 6a zeigt wiederum die Ausgangssituation, bei welcher kein Pumpen-Volumenbereich verbleibt und die Eingangsöffnung hin zum Vorratsbehälter 1 geschlossen ist. In der Funktionsstellung gemäß Fig. 6b sind bereits Durchflußöffnungen 31 des Einlaß-Steuerkolbens 30 gegenüber dem Steuerkolben 16'' geöffnet. Danach wird der Einlaß-Steuerkolben 30 über einen Anschlagbereich 32 mit dem Steuerkolben 16'' nach unten in die Position nach 6c mitgenommen, wonach der Steuerkolben 16'' auch über die Anschläge 17'' den Förderkolben 11'' nach unten mitnimmt, wobei der Pumpen-Volumenbereich 25'' sich vergrößernd ausbildet und dabei Getränkekonzentrat aus dem Vorratsbehälter 1 ansaugt. Aus der unteren Funktionsstellung des Steuerkolbens 16'' gemäß Fig. 6d wird der Steuerkolben 16'' wieder nach oben bewegt und verschließt die Durchflußöffnungen 31 des Einlaß-Steuerkolbens 30, so daß kein Getränkekonzentrat aus dem Pumpen-Volumenbereich 25'' durch die Einlaßöffnung 14'' des Gehäuses 8'' zurückfließen kann. Diese Funktionsstellung ist durch die Fig. 6e dargestellt. Danach gelangen die seitlichen Kanäle 26'' des Steuerkolbens 16'' in den Pumpen-Volumenbereich 25'', so daß bei der weiteren Aufwärtsbewegung des Steuerkolbens 16'', bei welcher der Förderkolben 11'' über die Anschläge 18'' mitgenommen wird, der Getränkekonzentrats-Inhalt im Pumpenvolumenbereich 25'' durch Verringerung dieses Pumpen-Volumensbereichs über den Ausgabekanal 27'' des Steuerkolbens heraustransportiert wird, bis die Funktionsstellung gemäß Fig. 6g, die der Funktionsstellung gemäß Fig. 6a entspricht, erreicht wird.

In Fig. 7 ist eine weitere Ausführungsform einer Ausgabevorrichtung 33 dargestellt, bei der das Getränkekonzentrat aus dem Vorratsbehälter über eine Zuführöffnung 34 in das Pumpengehäuse 35 eingeleitet und über eine Ausgabeöffnung 36 ausgegeben wird. Der Steuerkolben wird in diesem Fall auf der der Ausgabeöffnung 36 gegenüberliegenden Seite angetrieben und nimmt mit entsprechendem Hubversatz den Förderkolben 38 mit. Über den sich beim Herausziehen des Steuerkolbens öffnenden Ringkanal 39 wird der Zuströmweg für das Getränkekonzentrat von der Einlaßöffnung 34 zum Pumpenvolumenbereich 40 geöffnet und beim Zurückschieben des Steuerkolbens 37 wieder verschlossen. Diese Stellung ist in Fig. 7 dargestellt. Beim weiteren Einschieben des Steuerkolbens 37 wird der Förderkolben 38 mitbewegt und verringert den Pumpen-Volumenbereich, wodurch über die Kanäle 31 im Steuerkolben 37 das Getränkekonzentrat aus dem Pumpen-Volumenbereich 40 zur Ausgabeöffnung 36 gefördert werden.

Bei der erfindungsgemäßen Ausgabevorrichtung ist es wichtig, daß die jeweilige Bewegung des Steuerkolbens der Bewegung des Förderkolbens im Bereich des Freiraums zwischen den Anschlägen gesichert vorauseilt. Dies kann durch entsprechende Reibungsverhältnisse zwischen Steuerkolben und Förderkolben einerseits und Förderkolben und Gehäuse andererseits unterstützt werden. Da jedoch der Förderkolben die Förderkräfte aufnimmt und weitergibt, ist der gewünschte Bewegungsablauf alleine durch diese Tatsache im wesentlichen gesichert.

Es ist darauf zu achten, daß der über den Zwischenhebel 20 vom Exzenter 24 auf den Steuerkolben 16 übertragene Hub in Übereinstimmung mit den durch die Anschläge zwischen Steuerkolben und Förderkolben einerseits sowie zwischen Förderkolben und Gehäuse andererseits begrenzte Hubmöglichkeit ausgelegt wird. Durch Elastizitäten im Bereich der Gerätegehäuse-Befestigung der Ausgabevorrichtung und/oder im Bereich der Antriebsübertragung auf den Steuerkolben kann ein geringer Überhub zugeführt werden, so daß die eigentliche Hubbewegung durch die vorgesehenen Anschläge festgelegt ist.

In der Praxis wird die Halterung der Ausgabevorrichtung im Gerätegehäuse 9 und die Eingriffsorgane zwischen dem nockenangetriebenen Zwischenhebel 20 und dem Steuerkolben fachmännisch so ausgebildet sein, daß funktionsbeeinträchtigende Verkantungen ausgeschlossen werden.

## Patentansprüche

1. Vorrichtung zur dosierten Ausgabe von Flüssigkeiten aus einem Vorratsbehälter, wobei in einem gehäuseumschlossenen Zylinderraum ein Förderkolben (11) mit einer achsparallel verlaufenden Bohrung (11) längsverschieblich gelagert ist, und wobei in der Bohrung des Förderkolbens (11) ein Steuerkolben (16) gegenüber dem Förderkolben (11), begrenzt durch axiale Anschläge, längsverschieblich gelagert ist, und wobei in der Vorrichtung eine Einlaßöffnung (14) für den Zylinderraum zwischen dem Steuerkolben (16) und einer unmittelbar im stirnseitigen Bereich des Zylinderraums liegenden Zylinderabschnitt des Zylindergehäuses sowie ein Auslaßöffnung (26) gebildet werden, wobei die Einlaßöffnung (14) und die Auslaßöffnung durch axiale Verschiebung des Steuerkolbens (D) gegenüber dem Zylinderraum und dem Förderkolben (C) alternierend geöffnet bzw. geschlossen wird, **dadurch gekennzeichnet**, daß durch eine dem Steuerkolben (16) von einem Antriebselement (Zwischenhebel 20) zugeführte Axialbewegung dieser in beiden Bewegungsrichtungen einen Vorhub zum Öffnen bzw. Schließen der Einlaß- und der Auslaßöffnung (14, 26) ausführt, wonach durch Mitnahme über jeweilige Anschläge (17, 18) der Förderkolben (11) gleichermaßen axial verschoben wird, und daß zur Ableitung der Flüssigkeit aus dem Zylinderraum (25) in dem Steuerkolben (16) zumindest ein Kanal (26) angeordnet ist, welcher im Bereich einer durch den Förderkolben gebildeten Steuerkante ausgehend zur Ausgabeöffnung (27) geführt ist.

2. Vorrichtung nach Anspruch 1, dadurch gekennzeichnet, daß die Einlaßöffnung (14) für den Zylinderraum (25) durch einen im stirnseitigen Bereich des Zylinderraums in einen Zylinderabschnitt geführten Einlaß-Steuerkolben (30) in Verbindung mit dem Steuerkolben (16'') gebildet wird, wobei der Steuerkolben (16'') gegenüber dem Einlaß-Steuerkolben (30) zwischen axialen Anschlagbegrenzungen (32) zur Durchführung eines Vorhubs, der zum Öffnen bzw. zum Schließen der Einlaßöffnung (31) genutzt wird, axial verschieblich ist, wonach der Einlaß-Steuerkolben (30) über die jeweilige Anschlagbegrenzung vom Steuerkolben (16'') mitbewegt wird.

3. Vorrichtung nach Anspruch 2, dadurch gekennzeichnet, daß der Zylinderabschnitt im stirnseitigen Bereich des Zylinderraums den gleichen Durchmesser wie der benachbarte Abschnitt der Bohrung des Förderkolbens (11) aufweist.

4. Vorrichtung nach einem der Ansprüche 1 bis 3, dadurch gekennzeichnet, daß zur Zufuhr der Flüssigkeit aus dem Vorratsbehälter (1) im Steuerkolben zumindest ein Kanal zugeordnet ist, der radial aus dem Steuerkolben im Bereich einer durch den gehäusefesten Zylinderabschnitt bzw. den Einlaß-Steuerkolben gebildeten Steuerkante herausgeführt ist.

5. Vorrichtung nach einem der Ansprüche 1 bis 3, dadurch gekennzeichnet, daß zur Zufuhr der Flüssigkeit aus dem Vorratsbehälter (1) in den Zylinderraum (25) der im stirnseitigen Bereich des Zylinderraums liegende Zylinderabschnitt (14) genutzt wird und daß der Steuerkolben (16) zum Öffnen der Einlaßöffnung stirnseitig aus diesem Zylinderabschnitt in den Zylinderraum (25) hinein herausgezogen und zum Schließen der Einlaßöffnung dichtend in diesen Zylinderabschnitt (14) eingeschoben ist.

6. Vorrichtung nach Anspruch 2, dadurch gekennzeichnet, daß zur Zufuhr der Flüssigkeit aus dem Vorratsbehälter (1) in den Zylinderraum (25) im Einlaß-Steuerkolben (30) in diesen stirnseitig in den Zylinderraum (25'') endend zumindest ein Zuflußkanal (31) angeordnet ist, welcher durch die gegenüberliegende Stirnseite des Steuerkolbens (16'') dichtend abdeckbar ist.

7. Vorrichtung nach einem der Ansprüche 1 bis 6, dadurch gekennzeichnet, daß der Aufbau der Teile der Ausgabevorrichtung im wesentlichen rotationssymmetrisch ist.

8. Vorrichtung nach einem der Ansprüche 1 bis 7, dadurch gekennzeichnet, daß im Bereich zumindest der zylindrischen Führungswandungen zwischen Zylindergehäuse (8), Förderkolben (11) und/oder Steuerkolben (16) Dichtungslippen (28, 29) angeordnet sind.

9. Vorrichtung nach einem der Ansprüche 1 bis 8, dadurch gekennzeichnet, daß der Förderkolben (11) auf seiner dem Zylinderraum abgewandten Seite radial federnde Rasthaken aufweist, die mit einer Kante des Steuerkolbenschaftes einen der axialen Anschläge (13) bilden.

10. Vorrichtung nach einem der Ansprüche 1 bis 9, dadurch gekennzeichnet, daß der Steuerkolben frontseitig gegenüber dem Zylinderraum aus dem Zylindergehäuse herausragend einen Mitnahmebereich (21) aufweist, mit dem eine eine axialgerichtete wechselseitige Bewegung zuführende Antriebsvorrichtung (20, 24 zusammen wirkt.

11. Vorrichtung nach Anspruch 10, dadurch gekennzeichnet, daß im Nahbereich des Mitnahmebereichs des Steuerkolbens am Zylindergehäuse (8) ein Befestigungsbereich (10) angeordnet ist, über welchen das Zylindergehäuse (8) ortsfest und zur Antriebsvorrichtung (20, 24) ausgerichter lagerbar ist.

12. Vorrichtung nach einem der Ansprüche 1 bis 11, dadurch gekennzeichnet, daß der axiale Verschiebereich des Förderkolbens (11) gegenüber dem Zylindergehäuse (8) durch Anschläge (13) unmittelbar begrenzt ist und daß zwischen Zylindergehäuse (8), Antriebsvorrichtung (20) und Steuerkolben (16) ein elastisch wirkendes Ausgleichselement angeordnet ist.

13. Vorrichtung nach einem der Ansprüche 1 bis 12, dadurch gekennzeichnet, daß die Vorrichtung (7) fest verbundener Bestandteil des Vorratsbehälters (1) ist.

14. Vorrichtung nach Anspruch 13, dadurch gekennzeichnet, daß die Vorrichtung (7) mit dem Vorratsbehälter (1) elastisch verbunden ist.

15. Vorrichtung nach Anspruch 14, dadurch gekennzeichnet, daß die Vorrichtung (7) über ein konisches Zwischenstück (6) elastisch mit dem Vorratsbehälter (1) verbunden ist.

## Claims

1. Device for the metered delivery of liquids from a stock container, wherein a conveying piston (11) with an axially parallelly extending bore is borne to be longitudinally displaceable in a cylinder space enclosed by a housing, wherein a control piston (16) is borne to be longitudinally displaceable in the bore of the conveying piston (11), while being limited by axial abutments, relative to the conveying pistion (11) and wherein an inlet opening (14) for the cylinder space between the control piston (16) and a cylinder portion, which lies directly in the end region of the cylinder space, of the cylinder housing as well as an outlet opening (26) are formed in the device, wherein the inlet opening (14) and the outlet opening are opened and closed in alternation by axial displacement of the control piston (16) relative to the cylinder space and the conveying piston (11), characterised thereby, that by an axial movement given by a drive element (intermediate lever 20) to the control piston (16), this executes an initial stroke in both directions of movement for the opening or closing of the inlet opening (14) and the outlet opening (26), whereby the conveying piston (11) is equally displaced axially through entrainment by way of respective abutments (17, 18), and that at least one channel (26), which in the region of a control edge formed by the conveying piston is led to go out to the delivery opening (27), is arranged in the control piston (16) for conducting the liquid away out of the cylinder space (25).

2. Device according to claim 1, characterised thereby, that the inlet opening (14) for the cylinder space (25) is formed by an inlet control piston (30), which is guided in a cylinder portion in the end region of the cylinder space, in conjunction with the control piston (16''), wherein the control piston (16'') is axially displaceable relative to the inlet control piston (30) between axial abutment limitations (32) for the performance of an initial stroke which is utilised either for the opening or the closing of the inlet opening (31), whereafter the inlet control piston (30) is moved together with the control piston (16'') by way of the respective abutment limitation.

3. Device according to claim 2, characterised thereby, that the cylinder portion in the end region of the cylinder space displays the same diameter as the neighbouring portion of the bore of the conveying piston (11).

4. Device according to one of the claims 1 to 3, characterised thereby, that at least one channel, which is led radially out of the control piston in the region of a control edge formed either by the cylinder portion fast with the housing or by the inlet control piston, for the feed of the liquid out of the stock container (1).

5. Device according to one of the claims 1 to 3, characterised thereby, that the cylinder portion (14) lying in the end region of the cylinder space is utilised for the feed of the liquid out of the stock container (1) into the cylinder space (25) and that the control piston (16) is drawn at the end out of this cylinder portion into the cylinder space (25) for the opening of the inlet opening and pushed sealingly into this cylinder portion (14) for the closing of the inlet opening.

6. Device according to claim 2, characterised thereby, that at least one inflow channel (31), which ends in the cylinder space (25'') at the end in the inlet control piston (30) and which is sealingly coverable by the opposite end face of the control piston (16''), is arranged in the inlet control piston (30) for the feed of the liquid out of the stock container (1) into the cylinder space (25).

7. Device according to one of the claims 1 to 6, characterised thereby, that the build-up of the parts of the delivery device is substantially rotationally symmetrical.

8. Device according to one of the claims 1 to 7, characterised thereby, that sealing lips (28, 29) are arranged in the region of at least the cylinder guide walls between the cylinder housing (8), the conveying piston (11) and/or the control piston (16).

9. Device according to one of the claims 1 to 8, characterised thereby, that the conveying piston (11) on its side remote from the cylinder space displays radially resilient detent hooks which together with one edge of the control piston shank form one of the axial abutments (13).

10. Device according to one of the claims 1 to 9, characterised thereby, that the control piston projecting out of the cylinder housing opposite the cylinder space at the front displays an entraining region (21), with which a drive device (20, 24) cooperates, which supplies an axially directed alternating movement.

11. Device according to claim 10, characterised thereby, that a fastening region (10), by way of which the cylinder housing (8) is capable of being borne in fixed location and in alignment with the drive device (20, 24), is arranged at the cylinder housing (8) in the proximity of the entraining region of the control piston.

12. Device according to one of the claims 1 to 11, characterised thereby, that the axial displacement range of the conveying piston (11) relative to the cylinder housing (8) is limited directly by abutments (13) and that an elastically effective balancing element is arranged between the cylinder housing (8), the drive device (20) and the control piston (16).

13. Device according to one of the claims 1 to 12, characterised thereby, that the device (7) is a firmly connected component of the stock container (1).

14. Device according to claim 13, characterised thereby, that the device (7) is elastically connected with the stock container (1).

15. Device according to claim 14, characterised thereby, that the device (7) is elastically connected with the stock container (1) by way of a conical intermediate member (6).

## Revendications

1. Dispositif pour la distribution dosée de liquides contenus dans un réservoir, dans lequel un piston d'alimentation (11) comportant un perçage parallèle à l'axe est monté avec possibilité de déplacement longitudinal dans une chambre cylindrique entourée d'une enveloppe, un piston de commande (16) est monté avec possibilité de déplacement longitudinal limité par deux butées dans le perçage du piston d'alimentation (11) et dans lequel le dispositif comporte un orifice d'entrée (14) dans la chambre cylindrique aménagé entre le piston de commande (16) et une partie de l'enveloppe cylindrique située dans la région de l'extrémité frontale de la chambre cylindrique et un orifice de sortie (26), l'orifice d'entrée (14) et l'orifice de sortie étant alternativement ouverts et fermés par déplacement axial du piston de commande (16) par rapport à la chambre cylindrique et au piston d'alimentation (11), caractérisé par le fait que par un mouvement axial imprimé au piston de commande (16) par l'intermédiaire d'un organe d'entraînement (levier intermédiaire 20), ledit piston exécute une course dans les deux directions de déplacement pour ouvrir ou fermer les orifices d'entrée et de sortie (14, 26), au cours de laquelle le piston d'alimentation est déplacé de la même manière dans la direction axiale par entraînement par l'intermédiaire des butées (17, 18) et par le fait qu'au moins un conduit (26) est disposé dans le piston de commande (16) pour évacuer le liquide de la chambre cylindrique (25), lequel conduit mène d'un bord de commande formé par le piston d'alimentation à l'orifice de distribution (27).

2. Dispositif selon la revendication 1, caractérisé par le fait que l'orifice d'entrée (14) de la chambre cylindrique (25) est formé par un piston de commande d'entrée (30) guidé dans une partie cylindrique dans la région de l'extrémité frontale de la chambre cylindrique, en liaison avec le piston de commande (16''), le piston de commande (16'') pouvant se déplacer axialement par rapport au piston de commande d'entrée (30) entre deux butées axiales (32) pour effectuer une course qui est utilisée pour l'ouverture et la fermeture de l'orifice d'entrée (31), le piston de commande d'entrée (30) étant entraîné par le piston de commande (16'') par l'intermédiaire des butées.

3. Dispositif selon la revendication 2, caractérisé par le fait que la partie cylindrique dans la région de l'extrémité frontale de la chambre cylindrique a le même diamètre que la partie voisine du perçage du piston d'alimentation (11).

4. Dispositif selon l'une des revendications 1 à 3, caractérisé par le fait que, pour l'entrée du liquide provenant du réservoir (1) , au moins un conduit est disposé dans le piston de commande, lequel conduit est amené hors du piston de commande dans la région d'un bord de commande formé par la partie cylindrique solidaire de l'enveloppe et le piston de commande d'entrée.

5. Dispositif selon l'une des revendications 1 à 3, caractérisé par le fait que, pour l'entrée dans la chambre cylindrique du liquide provenant du réservoir (1), on utilise la partie cylindrique côté extrémité frontale de la chambre cylindrique et par le fait que pour pour ouvrir l'orifice d'entrée on tire le piston de commande qui sort de cette partie cylindrique et entre dans la chambre cylindrique (25) et que pour fermer l'orifice d'entrée de manière étanche on repousse ledit piston dans ladite partie cylindrique (14).

6. Dispositif selon la revendication 2, caractérisé par le fait que, pour l'entrée dans la chambre cylindrique du liquide provenant du réservoir (1), au moins un conduit d'entrée (31) est disposé dans le piston de commande (30), lequel conduit se termine dans le piston, côté frontal dans la chambre cylindrique et peut fermé de manière étanche par la face frontale en vis-à-vis du piston de commande (16'').

7. Dispositif selon l'une des revendications 1 à 6, caractérisé par le fait que les éléments du dispositif de distribution sont agencés sensiblement avec symétrie de rotation.

8. Dispositif selon l'une des revendications 1 à 7, caractérisé par le fait que des lèvres d'étanchéité sont disposées dans la région au moins des parois de guidage cylindriques entre l'enveloppe cylindrique (8), le piston d'alimentation (11) et/ou le piston de commande (16).

9. Dispositif selon l'une des revendications 1 à 8, caractérisé par le fait que, le piston d'alimentation (11) présente sur sa face tournée vers la chambre cylindrique des crochets d'encliquetage à élasticité radiale qui, en liaison avec un bord de la jupe du du piston de commande, forment l'une des butées (13) axiales.

10. Dispositif selon l'une des revendications 1 à 9, caractérisé par le fait que le piston comporte, côté frontal, une partie d'entraînement (21) qui fait saillie hors de l'enveloppe cylindrique par rapport à la chambre cylindrique et avec laquelle coopère un dispositif d'entraînement (20, 24) qui produit un alterné dans la direction axiale.

11. Dispositif selon la revendication 10, caractérisé par le fait qu'une partie de fixation est disposée sur l'enveloppe cylindrique, au voisinage de la partie d'entraînement du piston de commande, partie au moyen de laquelle l'enveloppe cylindrique peut être fixée fermement en étant positionnée par rapport au dispositif d'entraînement (20, 24).

12. Dispositif selon l'une des revendications 1 à 12, caractérisé par le fait que la zone de déplacement axial du piston d'alimentation (11) par rapport à l'enveloppe cylindrique (8) est limitée directement par des butées (13) et par le fait qu'un élément de compensation élastique est disposé entre l'enveloppe cylindrique (8), le dispositif d'entraînement (20) et le piston de commande (16).

13. Dispositif selon l'une des revendications 1 à 12, caractérisé par le fait que le dispositif (7) fait partie intégrante du réservoir (1).

14. Dispositif selon la revendication 13, caractérisé par le fait que le dispositif (7) est lié élastiquement au réservoir (1).

15. Dispositif selon la revendication 13, caractérisé par le fait que le dispositif (7) est lié élastiquement au réservoir (1) par l'intermédiaire d'une pièce de liaison (6) conique.
